# EUROPEAN PATENT APPLICATION

(11) **EP 4 485 699 A1**
(43) Date of publication of application: **01.01.2025**
(21) Application number: 24167697.2
(22) Date of filing: 28.03.2024
(51) Int. Cl.: H01R 11/05, H01R 13/02, H01R 13/187, H01R 13/40, H01R 13/41, H01R 13/506, H01R 13/436

(54) **UNIVERSAL DC SOCKET**

(30) Priority: 26.06.2023 CN 202310755570
(71) Applicant: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: YANG, Jun, Ningbo, 315103 (CN); CHEN, Hui, Ningbo, 315103 (CN); XU, Kai, Ningbo, 315103 (CN)
(74) Representative: 2K Patentanwälte Blasberg Kewitz & Reichel

(57) **Abstract**

The invention provides a DC socket that facilitates universal assembly, assembled from an insulating housing and an insulating seat, wherein a positioning hole is provided in the insulating housing, and a first limiting groove and a second limiting groove are formed in the insulating seat; the conductive resilient piece is positioned and installed on the inner wall of the insulating housing, and the rear end of the conductive resilient piece is provided with a first connecting piece; a conductive post is positioned and installed on the insulating seat, wherein the front end of the conductive post is provided with a post body, the rear end of the conductive post is provided with a second connecting piece, the post body passes through the insulating seat, and the second connecting piece is clamped with the second limiting groove; along with the assembly of the insulating seat to the insulating housing, the post body penetrates into the positioning hole, and the first connecting piece is accommodated in the first limiting groove, thereby restricting rotation of the conductive resilient piece relative to the conductive post. The DC socket is easy to assemble, the number of parts is reduced, the conductive post and the conductive resilient piece can be formed integrally, and the reliability and stability of electric contact is remarkably improved, so that the DC socket can become a universal standard component and ensure the consistency of products.

## Description

The present application claims priority to Chinese Patent Application No. 202310755570.0, filed on June 26, 2023, the whole contents of which are incorporated herein by reference.

### Technical Field

The invention relates to the technical field of electrical connection, in particular to a DC socket that facilitates universal assembly.

### Background

In the context of energy saving and environmental protection, LED lamps are increasingly used in the fields of household and commercial illumination due to their high light emitting efficiency and good light condensing performance. The LED lamp can be connected by plugs by adopting a DC socket, but the current DC socket needs to be assembled with a designed end cover in a matched manner after being pasted or welded, so that the reliability of the plug connection of the DC socket and wires is poor in a humid use environment, e.g. in a refrigerator, and the like. Moreover, the requirement of safety standard cannot be met. In addition, the DC sockets available on the market have a complex structure and a relatively high number of components, and different DC sockets require different assembly structures, and the structural consistency of products is poor.

Accordingly, those skilled in the art have been working to develop a universal DC socket that is convenient to assemble and is configured to improve the stability and reliability of the electrical connection.

### Disclosure of Invention

In view of the above-mentioned drawbacks of the prior art, the technical problem to be solved by the present invention is that the reliability of the existing DC sockets is poor and their assembly is complex.

In order to achieve the above purpose, the present invention provides a DC socket, comprising an insulating housing and insulating seat assembled together, wherein the insulating housing has an inner chamber and is provided with a conductive resilient piece and a conductive post, the front end of the insulating housing is provided with a jack, the front end of the conductive resilient piece and the conductive column is each exposed in the jack, and the insulating seat is connected to the rear end of insulating housing. According to the present invention the insulating housing is provided with a positioning hole and the insulating seat is provided with a first limiting groove and a second limiting groove, wherein the conductive resilient piece is positioned and mounted on an inner wall of the insulating housing and is provided with a first connecting piece at a rear end thereof, and the conductive post is positioned and mounted on the insulating seat, and wherein the front end of the conductive post is provided with a post body, the rear end of the conductive post is provided with a second connecting piece, the post body passes through the insulating seat, and the second connecting piece is clamped, in particular snap-fitted, with the second limiting groove as the insulating seat is assembled to the insulating housing, the post body penetrates into the positioning hole, and the first connecting piece is accommodated in the first limiting groove, thereby limiting the rotation of the conductive resilient piece relative to the conductive post.

According to a further embodiment, the front end of the conductive resilient piece is formed by an inwardly bent or curved metal sheet and comprises a plurality of resilient clamping pieces circumferentially arranged around the post, the resilient clamping pieces being arranged at intervals and abutting against the inner wall of the insulating housing.

According to a further embodiment, a first clamping piece is formed on the outer side of the conductive resilient piece, a first engaging groove is formed in the insulating housing and corresponds to the first clamping piece, and the first clamping piece is engaged in the second engaging groove.

According to a further embodiment, a pair of spaced apart clamping walls as formed at a middle part of the conductive post, the distance between the two clamping walls being larger than the diameter of the post, the clamping walls being snapped into the inner hole of the insulating seat.

According to a further embodiment, each of the clamping walls is arranged vertically opposite the second connecting piece, and the inner hole of the insulating seat is formed as a square hole.

According to a further embodiment, the second connecting piece comprises a first bending portion and a second bending portion, the first bending portion and the second bending portion form an angle, the first bending portion abuts against a concave bottom of the second limiting groove, and the second bending portion is accommodated in the second limiting groove.

According to a further embodiment, both sides of the second bending portion extend outwardly to form an expanding portion, and an inner wall of the second limiting groove forms a limiting slide groove, and the expanding portion is clamped in or snapped into the limiting slide groove.

According to a further embodiment, the first limiting groove and the second limiting groove are respectively provided with a first limiting step and a second limiting step, the first limiting step and the second limiting step respectively abut against the same side surfaces of the first connecting piece and the second connecting piece, an end portion of the first connecting piece is bent back toward the insulating seat to form a first lap portion, and an end portion of the second connecting piece is bent back towards the insulating seat to form a second lap portion.

According to a further embodiment, the insulating seat further comprises a mounting surface matingly connected to the insulating housing, the rear end of the insulating housing is provided with an outwardly extending connecting block, the mounting surface is provided with mounting holes adapted for the connecting block to be inserted, in particular plugged-in, and an outwardly extending mounting post, the mounting surface abuts against the rear end of the insulating housing while the mounting post fits, in particular is plugged, into the inner cavity of the insulating housing.

The invention also provides a method of assembling a DC socket as outlined above, comprising the following steps: assembling the insulating housing and the conductive resilient piece, and inserting or fitting the conductive resilient piece into the inner cavity of the insulating housing along the mounting direction from a rear end thereof to a front end thereof; assembling the conductive post and the insulating seat so that the post body extends through the insulating seat forwards along the mounting direction from the rear end to the front end while the second connecting piece abuts against the second limiting groove; assembling the insulating housing and the insulating seat, so that the insulating seat is abutted against the rear end of the insulating housing along the mounting direction from the rear end to the front end, the post body of the conductive post passes through the positioning hole in the insulating housing, and the first connecting part of the conductive resilient piece is clamped or snapped into the first limiting groove of the insulating seat, thereby limiting rotation of the conductive resilient piece relative to the conductive post.

According to a further embodiment of the method, the insulating seat comprises a mounting surface matingly connected with the insulating housing, the rear end of the insulating housing is provided with an outwardly extending connecting block, the mounting surface is provided with a mounting hole suitable for the connecting block to be inserted, and after the rear end surfaces of the insulating seat and the insulating housing abut against each other, the connecting block and the mounting hole are fixedly connected by pressing against each other, in particular by a hot riveting process.

Compared with the traditional mating connection structure, the hot riveting process has significant advantages. The reason is that, in the traditional mating structure, there are tolerance ranges for different parts, and there are gaps between parts, and when the number of parts becomes larger, the accumulated tolerance increases, which reduces the precision of the DC socket. By adopting a hot riveting solution according to the present invention tolerances are not accumulated and therefore the assembly precision is improved. Meanwhile, the traditional assembly structure requires increasing the structure of the connecting part in the structural design, and the mold processing is complicated and costly.

The universal DC socket provided by the invention has the following technical effects:
(1) The assembly is simple, the number of parts is reduced, and the cost of the product is reduced;
(2) The conductive post and the conductive resilient piece are integrally formed or molded, so that the reliability and stability of electrical contact are remarkably improved;
(3) After the DC socket is adopted, the lamp end cover with various shapes can be structurally designed in a standardized mode with similar structures, so that the lamp end cover becomes a universal standard part, ensuring product consistency and improving production efficiency.

The conception, specific structure, and technical effects of the present invention will be further described with reference to the accompanying drawings to fully understand the objects, features, and effects of the present invention.

### Drawings

- Fig. 1: is a schematic view of the external structure of a DC socket according to the present invention.
- Fig. 2: is a longitudinal sectional view showing the internal structure of the DC socket according to the present invention.
- Fig. 3: is an exploded view of the DC socket according to the present invention.
- Fig. 4: is a schematic structural view of an insulating seat of the DC socket according to the present invention, wherein (a) is a view from the rear side and (b) is a view from the front side.
- Fig. 5: is a schematic structural view of an insulating housing of the DC socket according to the present invention, wherein (a) is a view from the rear side and (b) is a view from the front side.
- Fig. 6: is a schematic view showing the assembly of the DC socket according to the present invention.
- Fig. 7: is a schematic diagram of an application of the DC socket according to the present invention.

### Detailed Description

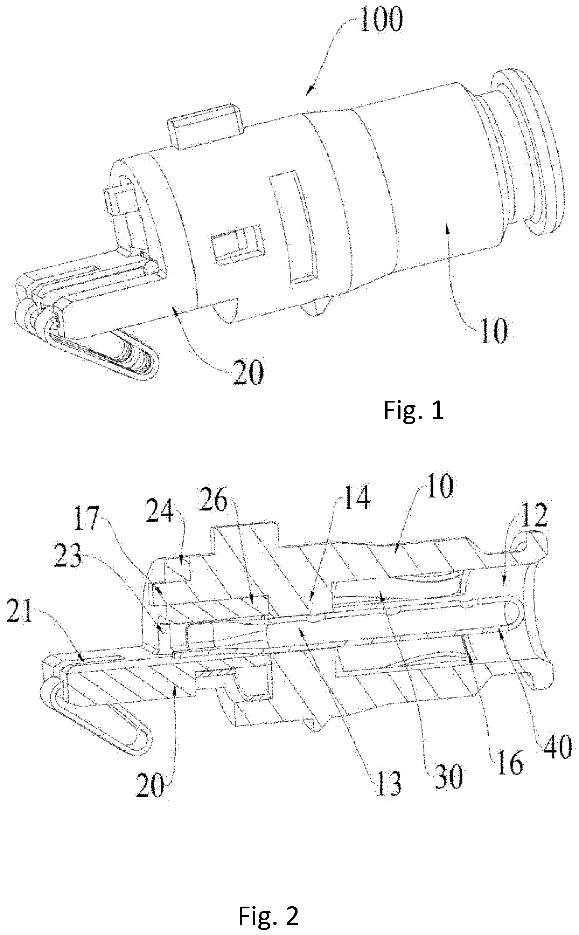

As shown in Figs. 1 to 3, a DC socket 100 according to the present invention comprises an insulating housing 10 and an insulating seat 20 assembled together, wherein the insulating housing 10 comprises an inner cavity 11, preferably having a cylindrical structure, a conductive resilient piece 30 and a conductive post 40 are disposed in the inner cavity 11, and the insulating seat 20 is cooperatively or matingly connected to the rear end of the insulating housing 10. A jack 12 is provided at the front end of the insulating housing 10, and the front ends of the conductive resilient piece 30 and of the conductive post 40 are exposed in the jack 12 as conductive components.

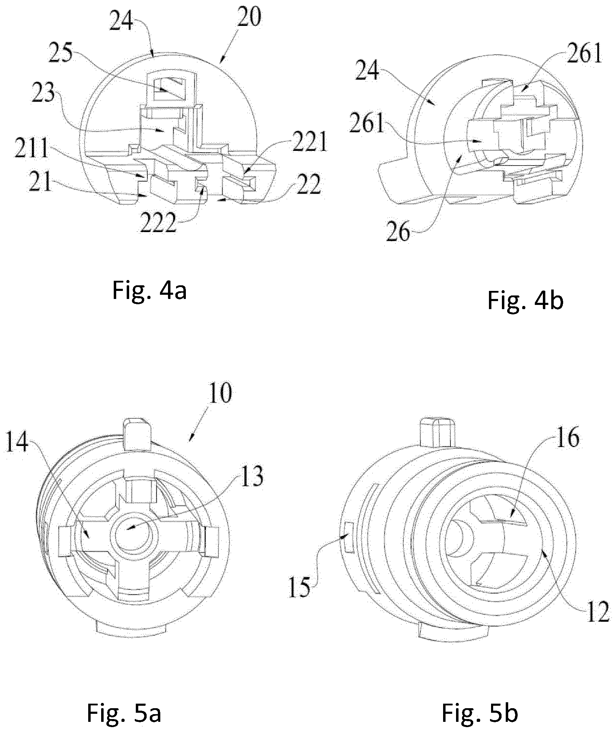

As shown in Fig. 5, a positioning hole 13 is provided or formed in the insulating housing 10, the positioning hole 13 being connected to the inner wall of the insulating housing 10 through a plurality of ribs 14. As shown in Fig. 4, a first limiting groove (slot) 21 and a second limiting groove (slot) 22 are provided on the insulating seat 20. The conductive resilient piece 30 is mounted in the insulating housing 10 in a mating (in particular form-fitting) manner, and the conductive post 40 is mounted in the insulating seat 20 in a mating (in particular form-fitting) manner. More specifically, the conductive resilient piece 30 is positioned and mounted on the inner wall of the insulating housing 10. The rear end of the conductive resilient piece 30 may be provided with a first connecting piece 32, the conductive post 40 being positioned and mounted on the insulating seat 20. The front end of the conductive post 40 is provided with a post 41, the rear end of the conductive post 40 may be provided with a second connecting piece 42, the post 41 may pass through the insulating seat 20, and the second connecting piece 42 is clamped to or snapped into the second limiting groove 22. When the insulating seat 20 is assembled to the insulating housing 10, the post 41 is inserted into the positioning hole 13, and the first connecting piece 32 is embedded (accommodated) and limited in the first limiting groove 21, thereby limiting rotation of the conductive resilient piece 30 relative to the conductive post 40.

The first limiting groove 21 and the second limiting groove 22 are bar-shaped or rectangular grooves, the openings of the first limiting groove and of the second limiting groove extend to the rear end of the insulating seat 20, the extending direction being along the length direction of the insulating seat 20, and the opening concave parts of the grooves are positioned within the insulating seat 20.

The conductive resilient piece 30 is integrally formed from a metal sheet. In particular, the front end of the conductive resilient piece 30 is formed by bending the metal sheet inwards, wherein the conductive resilient piece may comprise a plurality of resilient clamping pieces 31 circumferentially arranged around a post body 41 of the conductive post 40, and the resilient clamping pieces 31 being arranged at intervals (spaced apart) and are abutted against the inner wall of the insulating housing 10. The resilient clamping pieces (clips) 31 are integrally formed and are resiliently supported on the inner wall of the insulating housing 10 after bending, and the heads of the resilient clamping pieces 31 are bent inwardly to form a neck, so that a connecting plug can be conveniently connected when the connecting plug is used for plugging, and a resilient clamping force is provided through the neck to ensure the stability of the connection.

A first clamping piece 33 may be formed on the outer side of the conductive resilient piece 30, and a first clamping groove 15 may be formed in the insulating housing 10 to correspond to the first clamping piece 33, so that the first clamping piece 33 can be snapped into the corresponding first clamping groove 15. Preferably, two first clamping pieces 33 are formed by bending at two sides of the conductive resilient piece 30, wherein the protruding end of the first clamping piece 33 faces the rear end of the insulating housing 10, and when the conductive resilient piece 30 is installed in the insulating housing 10 from the rear end to the mounting direction M of the front end, the first clamping piece 33 and the first clamping groove 15 are in engagement to prevent the conductive resilient piece 30 from being withdrawn. Further preferably, at the front end of the insulating housing 10, a second clamping groove 16 may formed concavely along the inner wall to match with (correspond to) the end of the conductive resilient piece 30, and the second clamping groove 16 may abut against the front end of the conductive resilient piece 30 to limit the movement of the conductive resilient piece 30 towards the front end. Preferably, the first connecting piece 32 of the conductive resilient piece 30 further comprises a second clamping piece 34, the second clamping piece 34 abutting against the first limiting groove 21. The second clamping piece 34 and the second clamping groove 16 are optional structures for limiting the conductive resilient piece 30 to slide towards the front end. In this manner, the conductive resilient piece 30 and the insulating housing 10 are positioned after mounting.

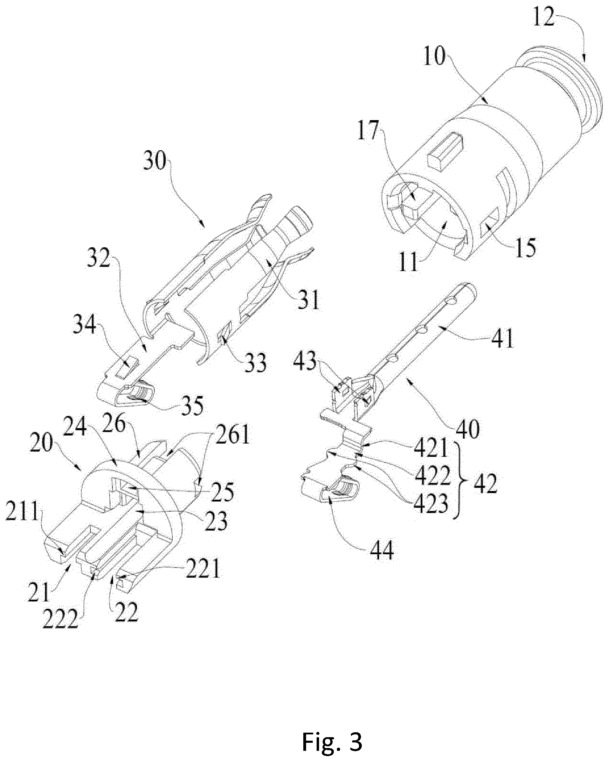

The front end of the conductive post 40 may be formed as a post body 41 extending along the mounting direction M. A pair of fastening walls 43 (snap-fit walls) spaced apart from each other are formed approximately in the middle of the conductive post 40, the fastening walls 43 being adjacent to the rear end of the post body 41 and forming an angle with the second connecting piece 42. Preferably, the post body 41, the fastening walls 43 and the second connecting piece 42 are integrally formed and processed from a metal sheet. The post body 41 comprises two connected half cylinders 41, and a certain gap is reserved between the two half cylinders 41, so that a certain degree of inward resilient contraction can be generated to adapt to the inner diameters of different plug interfaces when the post body 41 is connected with or inserted into the plug interface. The distance between the two fastening walls 43 is greater than the diameter of the post body 41, so that when the conductive post 40 passes through the inner hole 23 of the insulating seat 20, the post body 41 penetrates and then snaps the fastening walls 43 to the inner bore 23 of the insulating seat 20. In the embodiment shown in Fig. 3, two fastening walls 43 extend vertically, the outer sides of the fastening walls 43 protrude to form a snap, the inner hole 23 of the insulating seat 20 is correspondingly shaped as a square hole, and after penetrating into the conductive post 40, the fastening walls 43 are snapped to the two inner walls of the inner hole 23 and are restricted by the shape of the inner hole 23 to prevent the conductive post 40 from rotating with respect to the insulating seat 20.

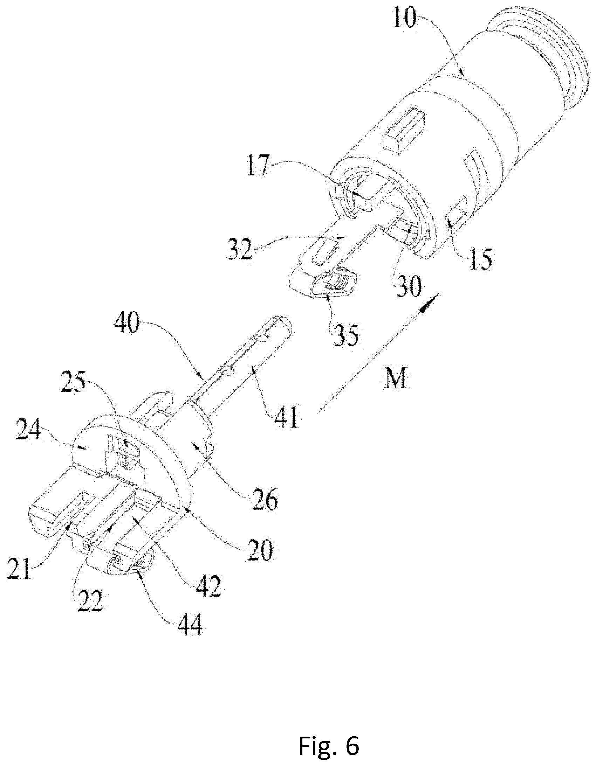

The rear end of the conductive post 40 may be formed as a second connecting piece 42, wherein the second connecting piece 42 is bent in multiple segments and includes a first bending portion 421 and a second bending portion 422, where the first bending portion 421 and the second bending portion 422 form an angle, for example, are bent vertically, in the embodiment shown in Fig. 3 and Fig. 6, the first bending portion 421 abuts against the concave bottom of the second limiting groove 22, two sides of the second bending portion 422 extend outwards to form an expanding portion 423, the inner wall of the second limiting groove 22 forms a limiting slide groove 222, and the expanding portion 423 is clamped in or snapped into the limiting slide groove 222.

Thus, when the conductive post 40 is mounted on the insulating seat 20, the post body 41 extends into the inner hole 23 along the mounting direction M, the second bending portion 422 slides into the limiting slide groove 222, the fastening wall 43 is fastened or snapped to the inner hole 23 to prevent the inner hole from retreating, and the first bending portion 421 is prevented from moving forward due to limited abutment. Thus, the conductive post 40 and the insulating seat 20 are positioned and mounted.

Furthermore, the first limiting groove 21 and the second limiting groove 22 may be respectively provided with a first limiting step 211 and a second limiting step 221, wherein the first limiting step 211 and the second limiting step 221 respectively abut against the same side surfaces of the first connecting piece 32 and the second connecting piece 42, and for the second connecting piece 42, the second bending part 422 abuts against the second limiting step 221 after being mounted. The end portion of the first connecting piece 32 is bent back towards the insulating seat 20 to form a first lap portion 35, and the end of the second connecting piece 42 is bent back towards the insulating seat 20 to form a second lap portion 44. The first connecting piece 32 and the second connecting piece 42 are installed in the insulating seat 20 spaced apart from each other to implement a spatial isolation, and after installation, the first lap portion 35 and the second lap portion 44 are facing towards the same side, which is suitable for being in contact with the circuit board surface on the same side to accomplish an electric conduction, and the two lap portions are resilient and are backed against the insulating seat 20, so that resilient contact can be kept, which can maintain elastic contact and have better connection reliability.

The insulating seat 20 may comprise a mounting surface 24 which is matched to and connected with the insulating housing 10, wherein the rear end of the insulating housing 10 is provided with an outwardly extending connecting block 17, the mounting surface 24 is provided with a mounting hole 25 which is suitable for the connection block 17 to be inserted and a mounting post 26 which extends outwardly, and the mounting surface 24 abuts against the rear end of the insulating housing 10 while the mounting post 26 is matched and inserted in the inner cavity 11 of the insulating housing 10. Preferably, the mounting post 26 and the mounting hole 25 are treated by a hot riveting process to securely connect the insulating housing 10 and the insulating seat 20 together.

Furthermore, the mounting post 26 may provided with an insertion groove 261, so that the rib 14 inside the insulating housing 10 is inserted into and accommodated in the insertion groove 261 when it is inserted into the inner cavity 11 of the insulating housing 10. As shown in Fig. 5, the ribs 14 in the insulating housing 10 are distributed in the shape of a cross, and the front end of the mounting post 26 forms a cross-shaped insertion grooves 261, so that the ribs 14 can be accommodated to realize tight fit connection.

As shown in Fig. 6, the assembling method of the DC socket 100 according to the present invention comprises the steps of:
assembling the insulating housing 10 and the conductive resilient piece 30, and installing the conductive resilient piece 30 into the inner cavity 11 of the insulating housing 10 along the mounting direction M from the rear end to the front end until the first clamping piece 33 and the first clamping groove 15 are snapped into place;
assembling the conductive post 40 and the insulating seat 20, inserting the second connecting piece 42 along the limiting slide 222 along the mounting direction M from the rear end to the front end, moving forward to enable the post body 41 to extend forward through the inner hole 23 of the insulating seat 20, and the snap-fit wall 43 and the inner bore 23 snap into position between them, while the second connecting piece 42 rests against the second limiting groove 22, wherein the first curved portion 421 rests against the second limiting groove 22 at the concave bottom surface of the second limiting groove 22;
assembling the insulating housing 10 and the insulating seat 20 so that the insulating seat 20 abuts to the rear end of the insulating housing 10 along the mounting direction M from back to front, enabling the post body 41 of the conductive post 40 to pass through the positioning hole 13 in the insulating housing 10, the mounting post 26 of the insulating seat 20 is inserted into the inner cavity 11 of the insulating housing 10, and the first connecting piece 32 of the conductive resilient piece 30 is snapped into the first limiting groove 21 of the insulating seat 20 so as to limit the rotation of the conductive resilient piece 30 relative to the conductive post 40;
finally, the connecting block 17 of the insulating housing 10 is inserted into the mounting hole 25 on the insulating seat 20, and the mounting surface 24 abuts against the rear end face of the insulating housing 10, and the inserting block is fixedly connected to the insulating seat 20 by a hot riveting process.

According to the above steps, the assembly of the DC socket 100 according to the present invention is achieved.

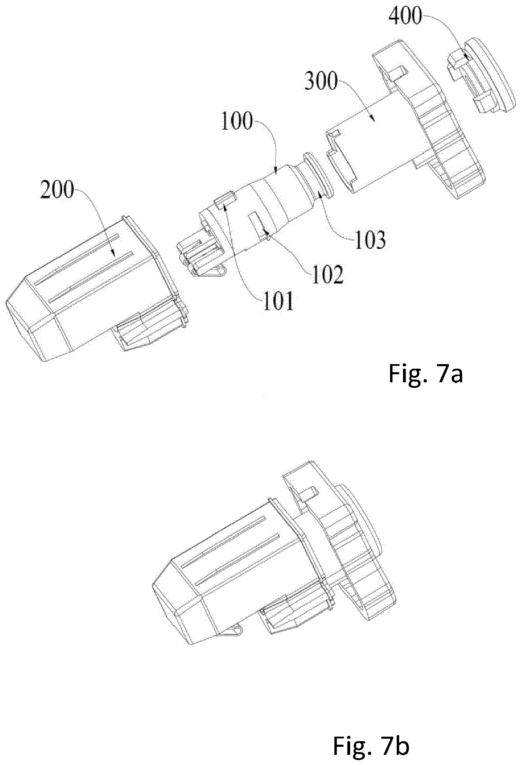

The assembled DC socket has a wide range of applications. For example, in one embodiment as shown in Fig. 7, the jacket 200 is assembled on the insulating seat 20 of the DC socket 100, and the end cover 300 and the outer cover 400 are assembled on the insulating housing 10 to form an end structure of the lamp, which is adapted to be mounted on an end of the lamp housing. A positioning block 101 and a positioning groove 102, which facilitate assembly of the components, are provided on the outside of the insulating housing 10, and preferably, a ring-shaped groove 103, which is recessed inward, is formed at the front end of the insulating housing 10 to allow installation of seals and to form a waterproof structure in cooperation with the end cap 300.

Accordingly, the adoption of the DC socket of the present invention makes it possible to structurally standardize the design of the end caps of lamps of various shapes with similar structures, and make them generalized standard parts.

The foregoing describes in detail preferred embodiments according to the present invention. It should be understood that numerous modifications and variations can be made in accordance with the concepts of the invention by one of ordinary skill in the art without undue burden. Therefore, all technical solutions which can be obtained by logic analysis, reasoning or limited experiments based on the prior art by the person skilled in the art according to the inventive concept shall be within the scope of protection defined by the claims.

### List of Reference Numerals

- 100: DC socket
- 101: positioning block
- 102: positioning groove
- 103: annular groove
- 10: insulating housing
- 11: inner cavity
- 12: jack
- 13: positioning hole
- 14: rib
- 15: first clamping groove
- 16: second clamping groove
- 17: connecting block
- 20: insulating seat
- 21: first limiting groove
- 211: first limiting step
- 22: second limiting groove
- 221: second limiting step
- 222: limiting slide groove
- 23: inner hole
- 24: mounting surface
- 25: mounting hole
- 26: mounting post
- 261: insertion groove
- 30: conductive resilient piece
- 31: resilient clamping piece
- 32: first connecting piece
- 33: first clamping piece
- 34: second clamping piece
- 35: first lap portion
- 40: conductive post
- 41: post body
- 42: second connecting piece
- 421: first bending part
- 422: second bending part
- 423: expanding part
- 43: clamping wall
- 44: second lap portion
- 200: sheath
- 300: end cover
- 400: outer cover
- M: mounting direction

## Claims

1. A DC socket, comprising an insulating housing (10) and insulating seat (20) assembled together, wherein
the insulating housing (10) has an inner chamber (11) and is provided with a conductive resilient piece (30) and a conductive post (40), the front end of the insulating housing (10) is provided with a jack (12), the front end of the conductive resilient piece (30) and the conductive column (40) is each exposed in the jack (12), and
the insulating seat (20) is connected to the rear end of insulating housing (10),
**characterized in that,** the insulating housing (10) is provided with a positioning hole (13) and the insulating seat (20) is provided with a first limiting groove (21) and a second limiting groove (22) , wherein
the conductive resilient piece (30) is positioned and mounted on an inner wall of the insulating housing (10) and is provided with a first connecting piece (32) at a rear end thereof, and
the conductive post (40) is positioned and mounted on the insulating seat (20), wherein
the front end of the conductive post (40) is provided with a post body (41), the rear end of the conductive post (40) is provided with a second connecting piece (42), the post body (41) passes through the insulating seat (20), and the second connecting piece (42) is clamped, in particular snap-fitted, with the second limiting groove (22) as the insulating seat (20) is assembled to the insulating housing (10),
the post body (41) penetrates into the positioning hole (13), and
the first connecting piece (32) is accommodated in the first limiting groove (21), thereby limiting the rotation of the conductive resilient piece (30) relative to the conductive post (40).

2. The DC socket as claimed in claim 1, wherein the front end of the conductive resilient piece (30) is formed by an inwardly bent or curved metal sheet and comprises a plurality of resilient clamping pieces (31) circumferentially arranged around the post (41), the resilient clamping pieces (31) being arranged at intervals and abutting against the inner wall of the insulating housing (10).

3. The DC socket as claimed in claim 1 or 2, wherein a first clamping piece (33) is formed on the outer side of the conductive resilient piece (30), a first engaging groove (15) is formed in the insulating housing (10) and corresponds to the first clamping piece (33), and the first clamping piece (33) is engaged in the second engaging groove (16).

4. The DC socket as claimed in any of claims 1 to 3, wherein a pair of spaced apart clamping walls (43) as formed at a middle part of the conductive post (40), the distance between the two clamping walls (43) being larger than the diameter of the post (41), the clamping walls (43) being snapped into the inner hole (23) of the insulating seat (20).

5. The DC socket as claimed in claim 4, wherein each of the clamping walls (43) is arranged vertically opposite the second connecting piece (42), and the inner hole (23) of the insulating seat (20) is formed as a square hole.

6. The DC socket as claimed in any of claims 1 to 5, wherein the second connecting piece (42) comprises a first bending portion (421) and a second bending portion (422), the first bending portion (421) and the second bending portion (422) form an angle, the first bending portion (421) abuts against a concave bottom of the second limiting groove (22), and the second bending portion (422) is accommodated in the second limiting groove (22).

7. The DC socket of claim 6, wherein both sides of the second bending portion (422) extend outwardly to form an expanding portion (423), and an inner wall of the second limiting groove (22) forms a limiting slide groove (222), and the expanding portion (423) is clamped in or snapped into the limiting slide groove (222).

8. The DC socket as claimed in any of claims 1 to 7, wherein the first limiting groove (21) and the second limiting groove (22) are respectively provided with a first limiting step (211) and a second limiting step (221), the first limiting step (211) and the second limiting step (221) respectively abut against the same side surfaces of the first connecting piece (32) and the second connecting piece (42), an end portion of the first connecting piece (32) is bent back toward the insulating seat (20) to form a first lap portion (35), and an end portion of the second connecting piece (42) is bent back towards the insulating seat (20) to form a second lap portion (44).

9. The DC socket as claimed in any of claims 1 to 8, wherein the insulating seat (20) further comprises a mounting surface (24) matingly connected to the insulating housing (10), the rear end of the insulating housing (10) is provided with an outwardly extending connecting block (17), the mounting surface (24) is provided with mounting holes (25) adapted for the connecting block (17) to be inserted, in particular plugged-in, and an outwardly extending mounting post (26), the mounting surface (24) abuts against the rear end of the insulating housing (10) while the mounting post (26) fits, in particular is plugged, into the inner cavity (11) of the insulating housing (10).

10. A method of assembling a DC socket as claimed in any of claims 1 to 9, comprising the steps of:
assembling the insulating housing (10) and the conductive resilient piece (30), and inserting or fitting the conductive resilient piece (30) into the inner cavity (11) of the insulating housing (10) along the mounting direction from a rear end thereof to a front end thereof;
assembling the conductive post (40) and the insulating seat (20) so that the post body (41) extends through the insulating seat (20) forwards along the mounting direction from the rear end to the front end while the second connecting piece (42) abuts against the second limiting groove (22);
assembling the insulating housing (10) and the insulating seat (20), so that the insulating seat (20) is abutted against the rear end of the insulating housing (10) along the mounting direction from the rear end to the front end, the post body (41) of the conductive post (40) passes through the positioning hole (13) in the insulating housing (10), and the first connecting part of the conductive resilient piece (30) is clamped or snapped into the first limiting groove (21) of the insulating seat (20), thereby limiting rotation of the conductive resilient piece (30) relative to the conductive post (40).

11. The method of assembling the DC socket as claimed in claim 10, wherein the insulating seat (20) comprises a mounting surface (24) matingly connected with the insulating housing (10), the rear end of the insulating housing (10) is provided with an outwardly extending connecting block (17), the mounting surface (24) is provided with a mounting hole (25) suitable for the connecting block (17) to be inserted, and after the rear end surfaces of the insulating seat (20) and the insulating housing (10) abut against each other, the connecting block (17) and the mounting hole (25) are fixedly connected by pressing against each other, in particular by a hot riveting process.
